Europäisches Patentamt

European Patent Office

Office européen des brevets

(19)

(11)     **EP 0 650 923 B1**

(12)     **EUROPÄISCHE PATENTSCHRIFT**

(45) Veröffentlichungstag und Bekanntmachung des Hinweises auf die Patenterteilung:
**05.02.1997 Patentblatt 1997/06**

(51) Int. Cl.⁶: **C01B 3/58**, B01J 12/00, B01J 35/04

(21) Anmeldenummer: **94116201.8**

(22) Anmeldetag: **12.10.1994**

(54) **Reaktor zur katalytischen Entfernung von CO in H2-reichem Gas**

Reactor for the catalytic removal of CO from a H2 rich gas

Réacteur pour l'élimination catalytique de CO d'un gaz riche en H2

(84) Benannte Vertragsstaaten:
FR GB IT

(30) Priorität: **14.10.1993 DE 4334981**

(43) Veröffentlichungstag der Anmeldung:
**03.05.1995 Patentblatt 1995/18**

(73) Patentinhaber: **DAIMLER-BENZ AKTIENGESELLSCHAFT**
**70567 Stuttgart (DE)**

(72) Erfinder:
• **Plog, Carsten, Dr.**
**D-88677 Markdorf (DE)**
• **Maunz, Werner**
**D-88677 Markdorf (DE)**
• **Stengel, Thomas, Dipl.-Ing.**
**D-88045 Friedrichshafen (DE)**
• **Andorf, Renato, Dr.**
**D-88074 Meckenbeuren (DE)**

(56) Entgegenhaltungen:
**EP-A- 0 432 364**

## Beschreibung

Die Erfindung betrifft einen Reaktor zur selektiven katalytischen Entfernung von CO in $H_2$-reichem Gas. Anwendung findet ein solcher Reaktor z.B. für die CO-Entfernung aus dem Abgas eines Reformers, um das Abgas als Reaktionsstoff für eine Brennstoffzelle aufzubereiten.

Die katalytische Oxidation von CO in $H_2$-reicher Atmosphäre wird in der Technik überwiegend in Festbettreaktoren an selektiven Edelmetallkontakten durch Eindüsen von Sauerstoff oder Luft durchgeführt. Der Katalysator liegt dabei in Form von Pellets oder Kugeln als Schüttung im Reaktionsrohr vor. Die von der Anmelderin durchgeführten Untersuchungen über die Anwendbarkeit der selektiven CO-Oxidation zur CO-Entfernung aus dem Abgas des $CH_3OH$-Reformers zeigen, daß die auftretenden Stoff- und Wärmetransportwiderstände zu einer verminderten Selektivität der CO-Oxidation und zu steilen Temperaturgradienten im Reaktor führen. Insgesamt bedeutet dies eine Absenkung der für die Brennstoffzelle zur Verfügung stehenden $H_2$-Menge und eine Erhöhung des CO-Niveaus an der Elektrode.

Aufgabe der Erfindung ist es deshalb, einen Reaktor zu schaffen, mit dem eine erhöhte Selektivität der CO-Oxidation erreicht und gleichzeitig steile Temperaturgradienten im Reaktor vermieden werden.

Diese Aufgabe wird durch den Reaktor nach dem Patentanspruch 1 gelöst.

Erfindungsgemäß umfaßt der Reaktor eine Struktur, die durch Form und Aufbau eine turbulente Strömung erzeugt und den Wärmetransport begünstigt. Der edelmetallhaltige selektive CO-Oxidationskatalysator ist auf diese Struktur aufgebracht.
Stoff- und Wärmetransportwiderstände, wie sie in einem Festbettreaktor auftreten, werden durch die in der Struktur unter bestimmten Reaktionsbedingungen erzeugte turbulente Strömung abgebaut. Dadurch können höhere CO-Umsätze und einheitliche Temperaturverlaufe im Reaktor erzielt werden. Darüberhinaus wird das dynamische Verhalten des Reaktors auf Änderungen der Betriebsbedingungen wesentlich verbessert.
Diese Struktur kann eine - insbesondere dreidimensionale - Trägerstruktur sein, die in den Reaktor eingebracht wird, z.B. eine metallische oder keramische Kreuzkanalstruktur. Möglich ist aber auch, die Reaktorwand selbst als turbulenzerzeugende und wärmetransportbegünstigende Struktur auszubilden. Ebenso können auch metallische oder keramische Schwamm- oder Faserstrukturen als Katalysatorträger dienen. Dabei muß die Porosität derartiger Strukturen so gewählt sein, daß der maximal zulässige Druckabfall nicht überschritten wird.

Der erfindungsgemäße Reaktor eignet sich insbesondere zur Anwendung unter nicht-stationären Bedingungen, wie sie beim Einsatz von Brennstoffzellen in Personen- und Nutzfahrzeugen vorherrschen. Sie können z.B. auch für Stromerzeugungsaggregate, bei denen Brennstoffzellen verwendet werden, genutzt werden.

Die selektive Oxidation an dem CO-Oxidationskatalysator läuft nach folgender Reaktion ab:

$$CO + 0,5 \, O_2 \rightarrow CO_2.$$

Abhängig von der Arbeitstemperaturen werden vorteilhaft die folgenden edelmetallhaltigen, selektiven CO-Oxidationskatalysatoren verwendet:

**90° - 120°:**

$Pt/Al_2O_3$, $Ru/Al_2O_3$

insbesondere:     $Pt(x \, ma\text{-}\%)/Al_2O_3$ mit $1 \leq x \leq 7$
               $Pt(5 \, ma\text{-}\%)/Al_2O_3$
               $Ru(0.44 \, ma\text{-}\%)/Al_2O_3$

**140° - 160°**

$Pt/Al_2O_3$, insbesondere: $Pt(0,3 \, ma\text{-}\%)/Al_2O_3$

**200° - 230°**

Pt-Zeolith, insbesondere Pt(1ma-%)NaY.

### Kreuzkanalstrukturen

Die an sich bekannten Wärme- und Stofftransporteigenschaften metallischer Kreuzkanalstrukturen (siehe z.B. Firmenprospekt der Firma Sulzer) werden mit den selektiven Eigenschaften des edelmetallhaltigen Oxidationskatalysators kombiniert. Kreuzkanalstrukturen bestehen aus gewelltem, gezackten oder in ähnlicher Weise geformten Metallfolien oder -schichten, die übereinandergelegt werden. Die Bereiche der "Wellenbäuche" beiderseits der Folien oder Schichten dienen dabei als Strömungskanäle. Die einzelnen Lagen werden derart aufeinandergelegt, daß die Strömungskanäle benachbarter Lagen einen Winkel zwischen 0° und 90°, vorzugsweise 90°, zueinander einschließen. Die Strömungskanäle sollten weiterhin zur Reaktorlängsachse einen Winkel zwischen 0° und 90°, vorzugsweise 45°, einnehmen.

Anhand des $Pt/Al_2O_3$-Katalysators wird im folgenden die Aufbringung des Katalysators auf den Metallwabenkörper mit Kreuzkanalstruktur beschrieben. Bei dem eingesetzten $Pt(5 \, ma\text{-}\%)/Al_2O_3$ handelt es sich um einen Tränkkatalysator in Form von Pulver, das kommerziell erhältlich ist. Das Platin liegt elementar auf dem Aluminiumoxid, das als Trägermaterial dient, vor. Das Pulver hat im Anlieferungszustand eine mittlere Korngröße von ca. 60 μm, die durch einen Mahlvorgang (s.u.) auf 3 μm herabgesetzt wird. Die BET-Oberfläche des Katalysators beträgt ca. 140 $m^2$/g.
Der Kreuzkanalträger wird zur Vorbehandlung mehrere Stunden unter Luftatmosphäre in einer Weise geglüht, daß die entstehende Struktur der Trägeroberfläche an die Dimension des Katalysatorpulvers angepaßt ist. Das Pt(5 ma-%)/Al$_2$O$_3$-Katalysatorpulver wird vor dem Beschichtungsvorgang in wäßriger Suspension gemahlen. Anschließend wird der Suspension Bindemittel zugegeben und mit Wasser aufgefüllt, so daß eine definierte Feststoffkonzentration vorliegt. Der vorbehandelte Metallträger wird dann in die Katalysatorsuspension getaucht. Nach dem Tauchvorgang werden die Kanäle des Trägers freigeblasen und der Träger getrocknet. Der Tauchvorgang mit anschließender Trocknung wird sooft wiederholt, bis die erforderliche Auftragsmasse erreicht ist. Abschließend wird der beschichtete Metallträger kalziniert.

Die Erfindung wird im folgenden mit Hilfe von Fig. näher erläutert.
Es zeigen:

Fig. 1     ein Diagramm zu den experimentell erreichten CO-Ausgangskonzentrationen;

Fig. 2     eine schematische Darstellung des erfindungsgemäßen Reaktors;

Fig. 3     ein Metallwabenkörper mit Kreuzkanalstruktur;

Fig. 4     Ausbildung des Grenzfilms in gasdurchströmten Rohren mit glatter und strukturierter Rohrinnenwand;

Fig. 5     Reaktor mit strukturierter Rohrinnenwand.

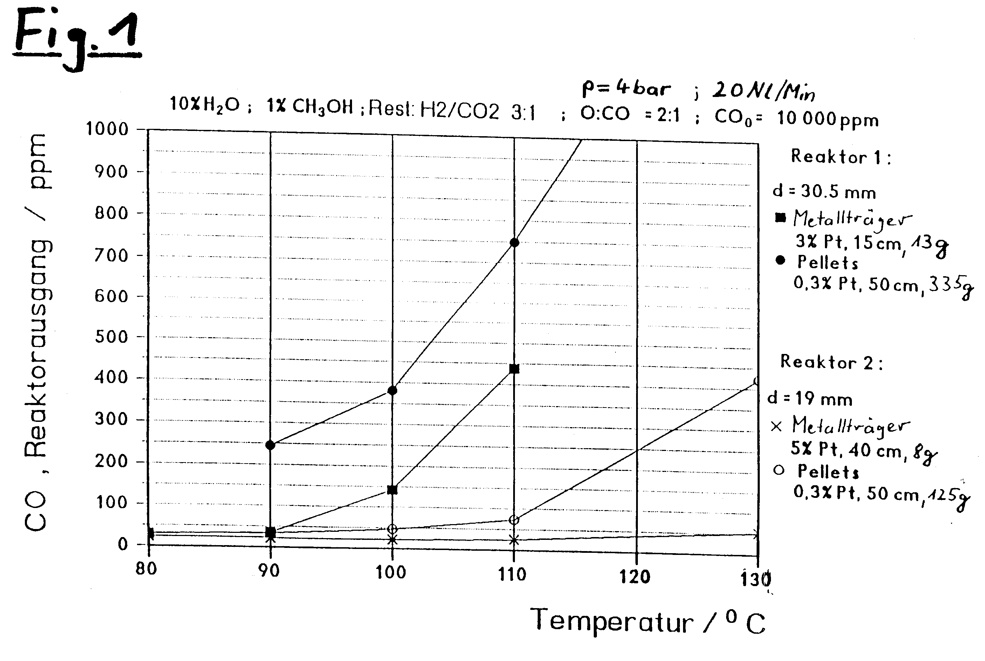

Fig. 1 zeigt beispielhaft einen Vergleich der erzielten CO-Ausgangskonzentrationen (Ordinate) im Temperaturbereich von 80 °C bis 130°C (Abszisse) in einem Festbettreaktor (kreisförmige Meßpunkte) und auf Metallträgern mit Kreuzkanalstruktur (Meßpunkte als Kreuz oder Quadrat) für jeweils unterschiedliche Reaktordurchmesser. Die Lagenhöhe der Kreuzkanalstruktur betrug 3.0 mm. Als Katalysator wurde Pt/Al$_2$O$_3$ in verschiedenen Pt-Konzentrationen verwendet. Die CO-Eingangskonzentration betrug jeweils 10 000 ppm. Das Eingangsgas wies neben dem CO und der Luft folgende Zusammensetzung auf: 10% H$_2$O, 1% CH$_3$OH, Rest H$_2$/CO$_2$ im Verhältnis 3:1.
Die dargestellten Ergebnisse zeigen, daß bei gegebenem Reaktordurchmesser durch Verwendung der Metallträger niedrigere CO-Ausgangskonzentrationen als im Festbettreaktor erzielt werden. Beispielsweise kann bei Einsatz der bezeichneten Metallträger in einem Reaktor mit einem Durchmesser von 19 mm die CO-Konzentration im genannten Temperaturbereich von 10 000 ppm auf unter 40 ppm gesenkt werden.

In Fig. 2 ist das Verfahrensschema der selektiven CO-Oxidation mit dem erfindungsgemäßen Reaktor dargestellt. In diesem Beispiel wird dem Reaktor das Abgas aus einem CH$_3$OH-Reformer, das bis zu 1 Vol.-% CO enthalten kann, zugeführt. In dem Reaktor befinden sich die Metallwabenkörper mit Kreuzkanalstruktur, die mit dem edelmetallhaltigen selektiven Katalysator beschichtet sind. An dem Katalysator wird das CO zu CO$_2$ oxidiert. Die CO-Konzentration des aus dem Reaktor austretenden Gases beträgt weniger als 40 ppm.

Fig. 3 zeigt ein Beispiel für einen Kreuzkanalträger. Dargestellt sind drei gezackte bzw. gewellte Metallfolien L. Die eingebuchteten Volumenbereiche links und rechts einer Folie L bilden jeweils Strömungskanäle K. Die einzelnen Lagen werden derart übereinander angeordnet, daß die Strömungskanäle einen bestimmten Winkel zwischen 0° und 90° miteinander einschließen. In der Zeichnung beträgt dieser Winkel etwa 90°. Zur Erhöhung der Übersichtlichkeit sind die einzelnen Bleche beabstandet voneinander gezeichnet, tatsächlich liegen sie jedoch unmittelbar aufeinander.

Fig. 4 zeigt die Ausbildung des Grenzfilms in einem gasdurchströmten Rohr mit glatter Rohrinnenwand im Vergleich zu einem Rohr mit strukturierter Rohrinnenwand. Im Fall der glatten Rohrinnenwand bildet sich ein dicker Grenzfilm aus, der einen stark verminderten Stofftransport an die katalytisch beschichtete Reaktorwand zur Folge hat. Bei strukturierter Rohrwand bleibt der Grenzfilm durch die an der Wand erzeugte Strömungsturbulenz über die gesamte Länge des Reaktors gleichmäßig dünn und bewirkt somit einen guten Stoffübergang. Die für beide Fälle aufgetragenen Sherwoodzahlen, die als Maß für den Stoffübergang dienen, verdeutlichen die unterschiedlichen Stoffübergangseigenschaften beider Reaktoren.

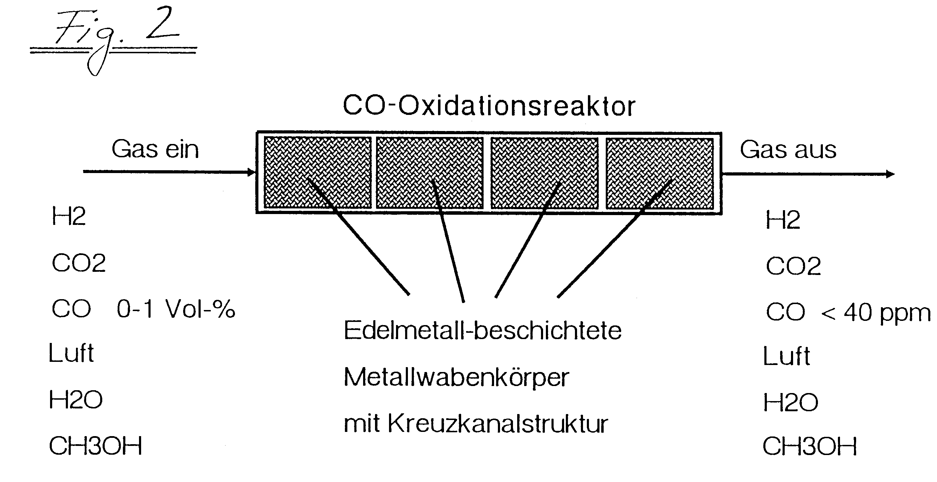

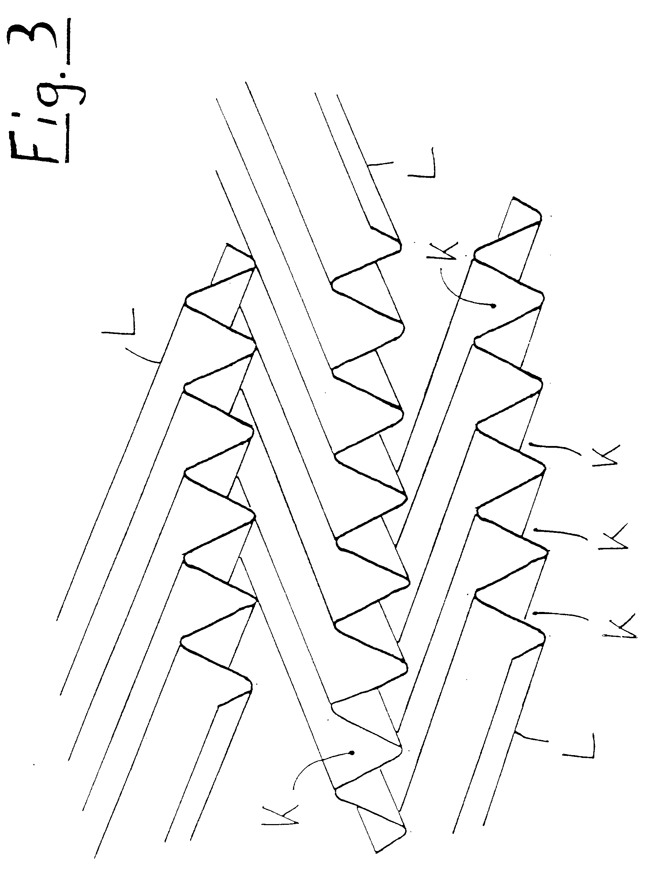

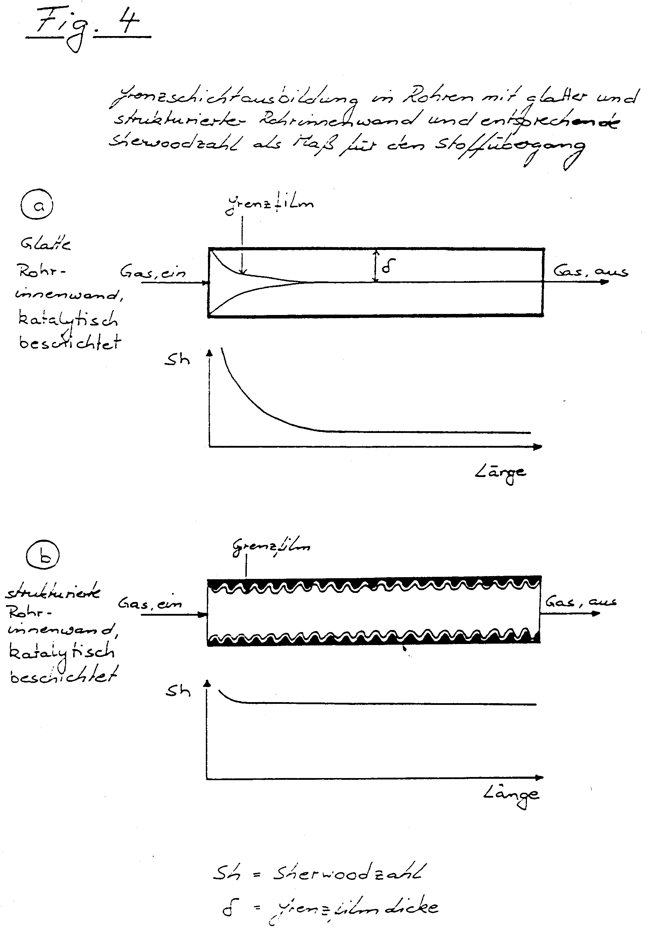

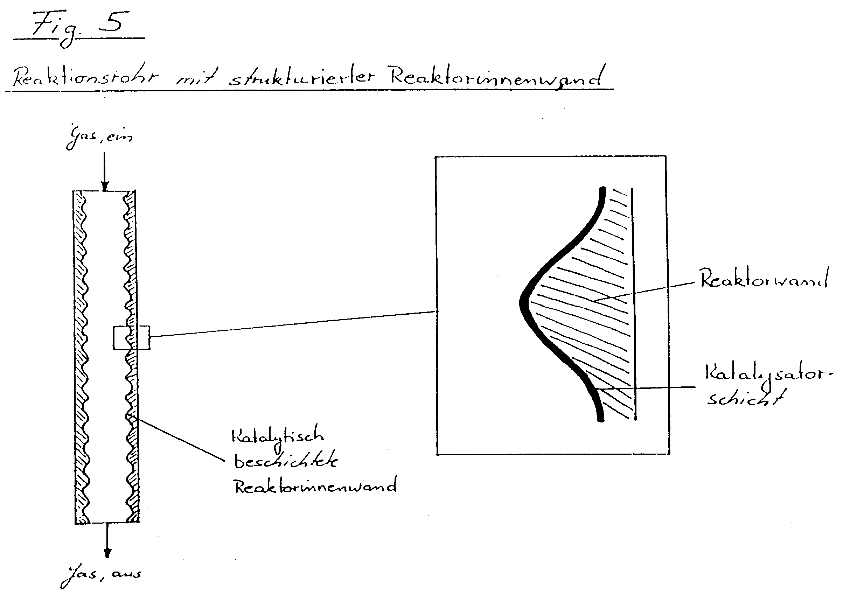

Fig. 5 zeigt beispielhaft einen Reaktor mit strukturierter Rohrinnenwand, auf der eine katalytische Beschichtung aufgebracht ist. Die gewellte Struktur der Wand verhindert die Ausbildung eines dicken Grenzfilms und erhöht dadurch den Stoffübergang an die katalytisch aktive Schicht.

**Patentansprüche**

1. Reaktor zur katalytischen Entfernung von CO in H$_2$-reichem Gas mit einem edelmetallhaltigen selektiven CO-Oxidationskatalysator, **dadurch gekennzeichnet**, daß der Reaktor eine Struktur umfaßt, die eine turbulente Strömung erzeugt und den Wärmetransport begünstigt, wobei die Struktur mit dem CO-Oxidationskatalysator beschichtet ist.

2. Reaktor nach Anspruch 1, **dadurch gekennzeichnet**, daß die Struktur ein metallischer oder keramischer Träger mit Kreuzkanalstruktur ist.

3. Reaktor nach einem der vorangehenden Ansprüche, **dadurch gekennzeichnet,** daß die Struktur ein metallischer oder keramischer Träger mit Schwamm- oder Faserstruktur ist.

4. Reaktor nach einem der vorangehenden Ansprüche, **dadurch gekennzeichnet,** daß die Struktur durch die Reaktorwand gebildet ist.

5. Reaktor nach einem der Ansprüche 2 bis 4, **dadurch gekennzeichnet,** daß die Oberflächenstruktur des metallischen oder keramischen Trägers oder der Reaktorwand an die Dimension des Katalysatorpulvers angepaßt ist.

6. Reaktor nach einem der vorangehenden Ansprüche, **dadurch gekennzeichnet,** daß die Schichtdicke des CO-Oxidationskatalysators an die CO-Eingangskonzentration angepaßt ist.

7. Reaktor nach einem der vorangehenden Ansprüche, **dadurch gekennzeichnet,** daß der CO-Oxidationskatalysator $Pt/Al_2O_3$ ist.

8. Reaktor nach Anspruch 7, **dadurch gekennzeichnet,** daß die Pt-Cluster des Katalysator-Pulvers eine Größe im Bereich von 3 bis 10 nm aufweisen.

9. Reaktor nach einem der vorangehenden Ansprüche, **dadurch gekennzeichnet,** daß der CO-Oxidationskatalysator $Ru/Al_2O_3$ oder Pt-Zeolith ist.

10. Verwendung des Reaktors in Verbindung mit einer Brennstoffzelle, insbesondere für mobile Anwendungen.

**Claims**

1. Reactor for catalytically removing CO from gas rich in $H_2$ with a selective CO oxidation catalyst containing precious metal, **characterised in that** the reactor is of a structure that produces a turbulent flow and is conducive to the transfer of heat, the structure being coated with the CO-oxidation catalyst.

2. Reactor as claimed in claim 1, **characterised in that** the structure is a metal or ceramic support with a crossed-passage structure.

3. Reactor as claimed in one of the preceding claims, **characterised in that** the structure is a metal or ceramic support with a sponge or fibre structure.

4. Reactor as claimed in one of the preceding claims, **characterised in that** the reactor wall forms the structure.

5. Reactor as claimed in one of claims 2 to 4, **characterised in that** the surface structure of the metal or ceramic support or the reactor wall is adapted to match the dimension of the catalyst powder.

6. Reactor as claimed in one of the preceding claims, **characterised in that** the thickness of the layer of CO oxidation catalyst is determined by the concentration of CO at the input.

7. Reactor as claimed in one of the preceding claims, **characterised in that** the CO oxidation catalyst is $Pt/Al_2O_3$.

8. Reactor as claimed in claim 7, **characterised in that** the Pt-cluster of the catalyst powder is of a size in the range of 3 to 10 nm.

9. Reactor as claimed in one of the preceding claims, **characterised in that** the CO oxidation catalyst is $Ru/Al_2O_3$ or Pt-zeolite.

10. Application of the reactor in conjunction with a fuel cell, in particular for mobile applications.

**Revendications**

1. Réacteur pour l'élimination catalytique du CO dans un gaz riche en $H_2$ avec un catalyseur d'oxydation du CO sélectif contenant un métal noble, caractérisé en ce que le réacteur contient une structure qui produit un écoulement turbulent et favorise le transport de la chaleur, la structure étant recouverte d'une couche du catalyseur d'oxydation du CO.

2. Réacteur selon la revendication 1, caractérisé en ce que la structure est un support métallique ou céramique avec une structure en canaux croisés.

3. Réacteur selon une des revendications précédentes, caractérisé en ce que la structure est un support avec une structure spongieuse ou fibreuse.

4. Réacteur selon une des revendications précédentes, caractérisé en ce que la structure est formée par la paroi du réacteur.

5. Réacteur selon une des revendications 2 à 4, caractérisé en ce que la structure superficielle du support métallique ou céramique ou de la paroi du réacteur est adaptée à la dimension de la poudre de catalyseur.

6. Réacteur selon une des revendications précédentes, caractérisé en ce que l'épaisseur de couche du catalyseur d'oxydation du CO est adaptée à la concentration de CO à l'entrée.

7. Réacteur selon une des revendications précédentes, caractérisé en ce que le catalyseur d'oxydation du CO est $Pt/Al_2O_3$.

8. Réacteur selon la revendication 7, caractérisé en ce que les amas de Pt de la poudre de catalyseur présentent une dimension comprise entre 3 et 10 nm.

9. Réacteur selon une des revendications précédentes, caractérisé en ce que le catalyseur d'oxydation du CO est $Ru/Al_2O_3$ ou une Pt-zéolite.

10. Utilisation du réacteur en liaison avec une pile à combustible, en particulier pour les applications mobiles.

**Fig.1**

$p = 4\,bar$ ; $20\,Nl/Min$

10%$H_2O$ ; 1% $CH_3OH$ ; Rest: H2/CO2 3:1 ; O:CO = 2:1 ; $CO_0$ = 10 000 ppm

Y-axis: CO , Reaktorausgang / ppm (0 – 1000)

X-axis: Temperatur / °C (80 – 130)

Reaktor 1:

d = 30.5 mm
■ Metallträger
3% Pt, 15 cm, 13 g
● Pellets
0.3% Pt, 50 cm, 335 g

Reaktor 2:

d = 19 mm
× Metallträger
5% Pt, 40 cm, 8 g
○ Pellets
0.3% Pt, 50 cm, 125 g

EP 0 650 923 B1

Fig. 2

CO-Oxidationsreaktor

Gas ein

H2
CO2
CO 0-1 Vol-%
Luft
H2O
CH3OH

Gas aus

H2
CO2
CO < 40 ppm
Luft
H2O
CH3OH

Edelmetall-beschichtete
Metallwabenkörper
mit Kreuzkanalstruktur

Fig. 3

EP 0 650 923 B1

# Fig. 4

Grenzschichtausbildung in Rohren mit glatter und strukturierter Rohrinnenwand und entsprechende Sherwoodzahl als Maß für den Stoffübergang

(a) Glatte Rohr-innenwand, katalytisch beschichtet

Grenzfilm

Gas, ein → → Gas, aus

$\delta$

Sh

Länge

(b) strukturierte Rohr-innenwand, katalytisch beschichtet

Grenzfilm

Gas, ein → → Gas, aus

Sh

Länge

$Sh$ = Sherwoodzahl

$\delta$ = Grenzfilmdicke

Fig. 5

Reaktionsrohr mit strukturierter Reaktorinnenwand

Gas, ein

Reaktorwand

Katalysatorschicht

Katalytisch
beschichtete
Reaktorinnenwand

Gas, aus